# EUROPEAN PATENT SPECIFICATION

(11) **EP 4 019 294 B1**
(45) Date of publication and mention of the grant of the patent: **09.08.2023**
(21) Application number: 21215212.8
(22) Date of filing: 16.12.2021
(51) Int. Cl.: B60C 19/12, B60C 1/00, B29D 30/00, B29D 30/06

(54) **PRODUCTION METHOD FOR PNEUMATIC TIRE**
HERSTELLUNGSVERFAHREN FÜR LUFTREIFEN
PROCÉDÉ DE PRODUCTION DE PNEU

(30) Priority: 25.12.2020 JP 2020217477
(43) Date of publication of application: 29.06.2022
(73) Proprietor: Sumitomo Rubber Industries, Ltd., Kobe-shi, Hyogo-ken 651-0072 (JP)
(72) Inventor: SATO, Takuya, Kobe-shi, 651-0072 (JP)
(74) Representative: Manitz Finsterwald Patent- und Rechtsanwaltspartnerschaft mbB

(56) References cited:
- EP-A1- 0 893 236
- WO-A1-2011/012699
- DE-A1- 2 457 808
- DE-A1-102018 116 939
- FR-A1- 2 966 081
- US-A- 3 048 509
- US-A1- 2016 167 455
- US-A1- 2018 236 824

## Description

### BACKGROUND OF THE INVENTION

### Field of the Invention

The present invention relates to a production method for a pneumatic tire in which a sealant layer is disposed inward of a tread portion in a tire radial direction.

### Description of the Background Art

Conventionally, a tire having a sealant material applied to an inner peripheral surface thereof is known (see, for example, Japanese Patent No. 5977306).

However, in the tire disclosed in Japanese Patent No. 5977306, foreign matter such as dust and insects may adhere to the surface of the sealant material, for example, when the tire is stored as a single body. The adhesion of such foreign matter may lead to a decrease in the commercial value of the tire. Furthermore, there is a risk that the sealant material will be deteriorated by ultraviolet rays.

In DE 10 2018 116 939 A1 a method for producing a pneumatic tire is disclosed, in which a green tire is vulcanized and thereafter a sealant layer is applied to the inner periphery of the vulcanized tire.

The present invention has been made in view of the above circumstances, and a main object of the present invention is to provide a pneumatic tire capable of suppressing adhesion of foreign matter to a sealant layer and deterioration of the sealant layer.

### SUMMARY OF THE INVENTION

The present invention is directed to a production method for a pneumatic tire, including: a first step of vulcanizing a green tire to mold a vulcanized tire; a second step of forming a sealant layer containing a viscous sealing agent on an inner side in a tire radial direction of a tread portion of the vulcanized tire; and a third step of forming a cover layer covering the sealant layer, on an inner peripheral surface of the sealant layer, wherein the third step includes a step of generating a mixture by mixing powder containing carbon black, and a step of applying or spraying the mixture to the inner peripheral surface.

In the production method for a pneumatic tire according to the present invention, the third step preferably includes a step of mixing powder containing carbon black in a proportion of 0.5 to 5.0%.

In the production method for a pneumatic tire according to the present invention, the inner peripheral surface of the sealant layer is covered with the cover layer in the third step, so that adhesion of foreign matter to the sealant layer is suppressed. In addition, since the mixture for forming the cover layer is generated by mixing the powder containing the carbon black, deterioration of the sealant layer is suppressed. Furthermore, by applying or spraying the mixture, the cover layer is easily and uniformly formed.

### BRIEF DESCRIPTION OF THE DRAWINGS

FIG. 1 is a cross-sectional view showing an embodiment of the pneumatic tire obtainable by the method according to the present invention;
FIG. 2 is a cross-sectional view showing a modification of the pneumatic tire in FIG. 1;
FIG. 3 is a flowchart showing a procedure of a production method for the pneumatic tire according to the present invention; and
FIG. 4 is a flowchart showing the details of a third step in FIG. 3.

### DESCRIPTION OF THE PREFERRED EMBODIMENTS

Hereinafter, an embodiment of the present invention will be described with reference to the drawings.

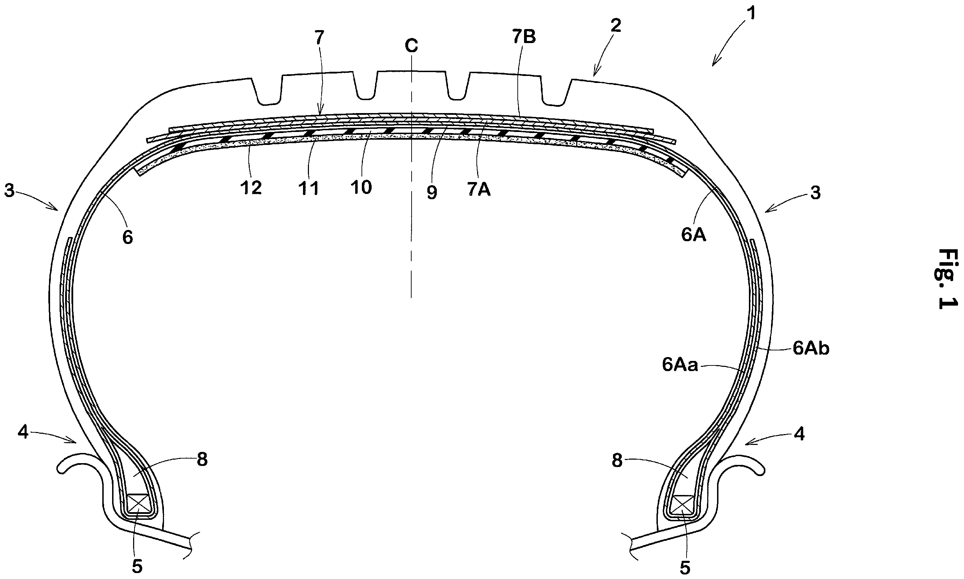

FIG. 1 is a meridian cross-sectional view of a pneumatic tire 1 according to the present embodiment. As shown in FIG. 1, the pneumatic tire 1 according to the present embodiment has a tread portion 2, a pair of sidewall portions 3, and a pair of bead portions 4.

The pneumatic tire 1 includes a carcass 6 extending between the pair of bead portions 4, and a belt layer 7 disposed in the tread portion 2.

A bead core 5 is embedded in each bead portion 4. The bead core 5 is formed, for example, in a polygonal cross-sectional shape in which a bead wire (not shown) made of steel is wound in multiple rows and multiple stages.

The carcass 6 is disposed so as to straddle a pair of the bead cores 5. The carcass 6 includes at least one carcass ply. The carcass ply is formed, for example, by coating an array of carcass cords with a topping rubber. For the carcass cords, for example, steel or an organic fiber such as polyester fibers, nylon fibers, rayon fibers, polyethylene naphthalate fibers, and aramid fibers is used.

The carcass 6 of the present embodiment includes a carcass ply 6A. The carcass ply 6A is disposed so as to extend through the tread portion 2 and the pair of sidewall portions 3 and straddle the pair of the bead cores 5.

The carcass ply 6A includes a main body portion 6Aa which extends from the tread portion 2 through the sidewall portions 3 to the bead cores 5, and turned-up portions 6Ab which are connected to the main body portion 6Aa, are turned up around the bead cores 5 from the inner side to the outer side in the tire axial direction, and extend outward in the tire radial direction. The turned-up portions 6Ab terminate in the sidewall portions 3.

The belt layer 7 is disposed outward of the carcass 6 in the tire radial direction. The belt layer 7 includes at least one belt ply. In the present embodiment, the belt layer 7 includes two belt plies 7A and 7B on the inner and outer sides in the tire radial direction. The belt plies 7A and 7B are each formed, for example by coating an array of belt cords with a topping rubber. Each of the belt cords of the belt plies 7A and 7B is preferably a highly elastic cord such as a steel cord.

A band layer (not shown) may be disposed outward of the belt layer 7 in the tire radial direction. The band layer includes at least one band ply in which organic fiber cords are arranged at a small angle, for example, 10 degrees or smaller, with respect to the tire circumferential direction. The band ply may be obtained by splicing a jointless band or ply that is formed by helically winding a band cord or a ribbon-shaped band-like ply.

A bead apex rubber 8 is provided outward of each bead core 5 in the tire radial direction. The bead apex rubber 8 is formed in a substantially triangular cross-sectional shape that is tapered toward the outer side in the tire radial direction.

An inner liner layer 9 is formed inward of the carcass 6, that is, on a tire inner cavity surface. The inner liner layer 9 is formed, for example, from an air-impermeable rubber, and maintains the internal pressure.

The pneumatic tire 1 according to the present embodiment includes a sealant layer 10 and a cover layer 11 at the tread portion 2.

The sealant layer 10 is disposed inward of the tread portion 2 in the tire radial direction, more specifically, inward of the inner liner layer 9 in the tire radial direction. The sealant layer 10 contains a viscous sealing agent. The inner liner layer 9 may be omitted in the region where the sealant layer 10 is formed in the cavity of the pneumatic tire 1.

The viscous sealing agent is not particularly limited as long as the viscous sealing agent has adhesiveness, and, for example, a rubber composition normally used for sealing puncture of a tire can be used. For example, a butyl-based rubber is used as a rubber component that forms a principal component of the rubber composition. Examples of the butyl-based rubber include isobutylene-isoprene-rubber (IIR) and also halogenated isobutylene-isoprene-rubbers (X-IIR) such as brominated isobutylene-isoprene-rubber (Br-IIR) and chlorinated isobutylene-isoprene-rubber (Cl-IIR). Among these rubbers, from the viewpoint of fluidity, etc., one of or both isobutylene-isoprene-rubber and a halogenated isobutylene-isoprene-rubber can be suitably used.

Examples of the liquid polymer in the viscous sealing agent include liquid polybutene, liquid polyisobutene, liquid polyisoprene, liquid polybutadiene, liquid poly-α-olefin, liquid isobutylene, liquid ethylene-α-olefin copolymers, liquid ethylene-propylene copolymers, and liquid ethylene-butylene copolymers. Among these polymers, from the viewpoint of imparting adhesiveness, etc., liquid polybutene is preferable. Examples of the liquid polybutene include copolymers having a long-chain hydrocarbon molecular structure based on isobutene which is further reacted with normal butene. Hydrogenated liquid polybutene can also be used.

A curing agent (crosslinking agent) is not particularly limited, a conventionally known compound can be used, and an organic peroxide is preferable. Use of the butyl-based rubber or the liquid polymer in an organic peroxide crosslinking system improves the adhesiveness, the sealing performance, the fluidity, and processability.

The amount of the organic peroxide (crosslinking agent) per 100 parts by mass of the rubber component is preferably not less than 0.5 parts by mass, more preferably not less than 1 part by mass, and further preferably not less than 5 parts by mass. If the amount is less than 0.5 parts by mass, the crosslink density may decrease, resulting in the viscous sealing agent flowing. The amount is preferably not greater than 40 parts by mass, more preferably not greater than 20 parts by mass, and further preferably not greater than 15 parts by mass. If the amount is greater than 40 parts by mass, the crosslink density may increase, so that the viscous sealing agent may become hard, resulting in a decrease in sealing performance.

The viscous sealing agent is sequentially prepared by sequentially supplying the above raw materials to a continuous kneader (particularly, a twin-screw kneading extruder), and is continuously discharged from a nozzle connected to a discharge port of the continuous kneader, and the discharged viscous sealing agent is sequentially applied directly to the inner peripheral surface of the tire. Accordingly, the pneumatic tire 1 can be produced with high productivity.

The thickness of the sealant layer 10 is not particularly limited, but is preferably not less than 1.0 mm, more preferably not less than 1.5 mm, further preferably not less than 2.0 mm, and particularly preferably not less than 2.5 mm, and is preferably not greater than 10 mm, more preferably not greater than 8.0 mm, and further preferably not greater than 5.0 mm. If the thickness of the sealant layer 10 is less than 1.0 mm, it is difficult to assuredly close a puncture hole when the pneumatic tire 1 is punctured. In addition, if the thickness of the sealant layer 10 is greater than 10 mm, the effect of closing a puncture hole does not change much, and the weight of the tire is increased. Thus, it is not preferable if the thickness of the sealant layer 10 is greater than 10 mm.

An inorganic additive selected from the group consisting of carbon black, silica, calcium carbonate, calcium silicate, magnesium oxide, aluminum oxide, barium sulfate, talc, mica, and mixtures thereof may be added to the viscous sealing agent.

The viscous sealing agent preferably contains, for example, 100 to 400 parts by mass of polybutene, 1 to 15 parts by mass of a crosslinking agent, and 1 to 15 parts by mass of a crosslinking activator per 100 parts by mass of isobutylene-isoprene-rubber. In addition, the average molecular weight of the polybutene is preferably, for example, 1000 to 4000.

The cover layer 11 is disposed on the inner peripheral surface of the sealant layer 10. The cover layer 11 covers the sealant layer 10.

The cover layer 11 is composed of a mixture obtained by mixing powder containing carbon black. Accordingly, adhesion of foreign matter such as dust and insects to the surface of the sealant layer 10 is suppressed, for example, when the tire is stored as a single body.

The cover layer 11 of the present embodiment is composed of a mixture obtained by mixing powder 12. The "powder" includes a material that is easily cut and fragmented when deformation corresponding to deformation of the tread portion 2 is applied after drying, and a material that becomes powdery after being dried. Accordingly, as compared with the form in which the cover layer 11 is formed by a sheet body or the form in which the cover layer 11 is composed of a mixture obtained by mixing fibers, sufficient fluidity of the viscous sealing agent contained in the sealant layer 10 is ensured, and an excellent puncture sealing effect is achieved.

The powder 12 contains carbon black. Carbon black has the function of absorbing ultraviolet rays. Therefore, the cover layer 11 in which the powder 12 containing carbon black is mixed suppresses transmission of ultraviolet rays to the sealant layer 10 and suppresses deterioration of the sealant layer 10.

The powder 12 preferably contains carbon black in a proportion of 0.5 to 5.0%. When the proportion of carbon black contained in the powder 12 is not less than 0.5%, transmission of ultraviolet rays to the sealant layer 10 is sufficiently suppressed, and deterioration of the sealant layer 10 is suppressed. When the proportion of carbon black contained in the powder 12 is not greater than 5.0%, sufficient fluidity of the viscous sealing agent contained in the sealant layer 10 is ensured, and an excellent puncture sealing effect is maintained.

The powder 12 may contain inorganic powder. In this case, the inorganic powder preferably contains at least one of calcium carbonate, talc, and mica.

In the mixture, a silicone and/or a surfactant is preferably mixed. An example of the surfactant is a polyalkylene glycol derivative. A mold release agent or a mixture prepared with the mold release agent as a base may be used from the viewpoint of excellent availability and in order to maintain the effect of suppressing adhesion of foreign matter over a long period of time.

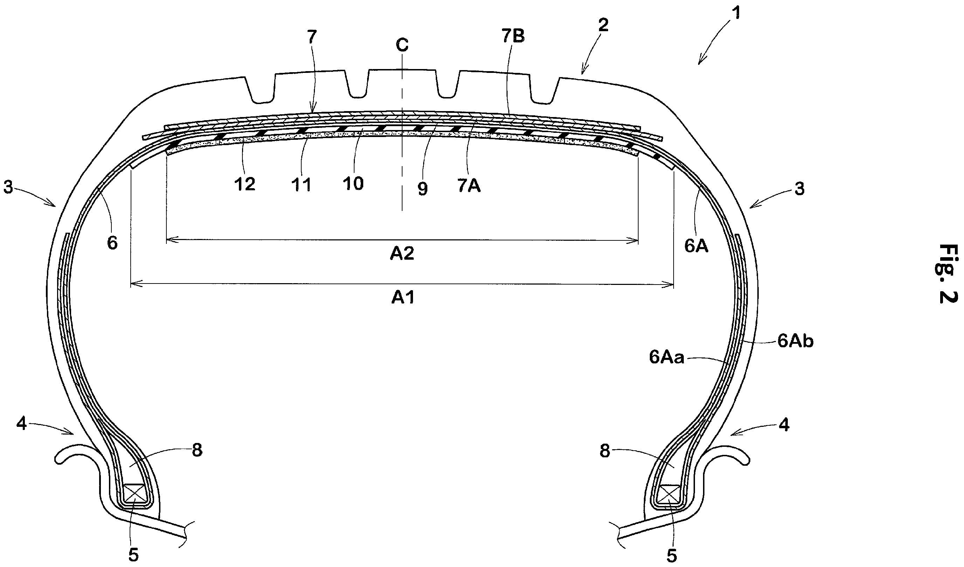

FIG. 2 is a cross-sectional view of a pneumatic tire 1A which is a modification of the pneumatic tire 1. In the pneumatic tire 1A, the components of the above-described pneumatic tire 1 can be used for the portions that are not described below.

In the pneumatic tire 1A, the cover layer 11 covers a part of the inner peripheral surface of the sealant layer 10. That is, the inner peripheral surface of the cover layer 11 is formed such that an area A2 thereof is smaller than an area A1 of the inner peripheral surface of the sealant layer 10. Accordingly, the weight of the pneumatic tire 1A is easily reduced.

In the pneumatic tire 1A, the cover layer 11 covers a part of the inner peripheral surface of the sealant layer 10. In the pneumatic tire 1A, the cover layer 11 preferably covers 80% or more of the inner peripheral surface of the sealant layer 10. Accordingly, adhesion of foreign matter to the sealant layer 10 and deterioration of the sealant layer 10 are suppressed over a wide range. The range covered with the cover layer 11 is calculated using the area of the inner peripheral surface of the sealant layer 10, an area calculated with the inner peripheral surface of the sealant layer 10 being developed, or the length in the tire axial direction of the inner peripheral surface of the sealant layer 10.

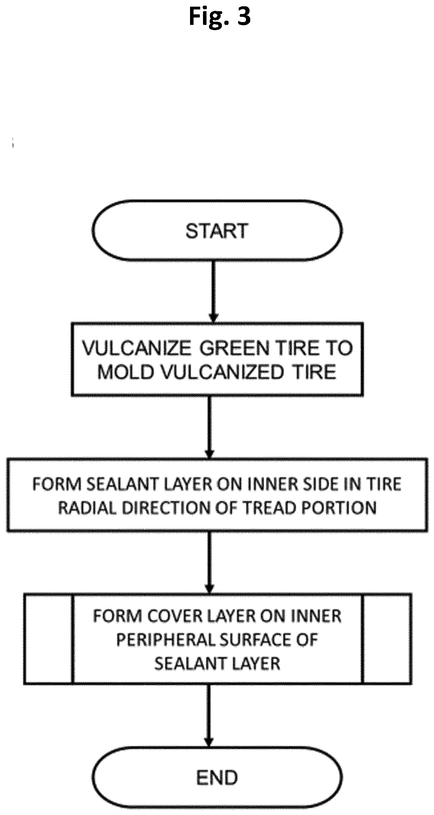

FIG. 3 shows a production method 100 for the pneumatic tire 1. The production method 100 includes a first step S1 to a third step S3.

In the first step S1, a vulcanized tire is molded by vulcanizing a green tire with a vulcanization mold or the like. Prior to the first step S1, the green tire is preformed by a known method.

In the second step S2, the sealant layer 10 is formed by applying the viscous sealing agent to the inner side in the tire radial direction of the tread portion of the vulcanized tire. In the present embodiment, the viscous sealing agent is spirally applied to the inner peripheral surface of the inner liner layer 9. More specifically, the viscous sealing agent is spirally applied to the inner peripheral surface of the inner liner layer 9, for example, by discharging the viscous sealing agent from the nozzle while rotating the vulcanized tire and moving the vulcanized tire in the tire axial direction. The thickness of the sealant layer 10 can be adjusted by adjusting the rotation speed and moving speed of the tire, the distance between the tip of the nozzle and the inner peripheral surface of the inner liner layer 9, etc.

In the third step S3, the cover layer 11 is formed on the inner peripheral surface of the sealant layer 10. Accordingly, adhesion of foreign matter to the sealant layer 10 is suppressed.

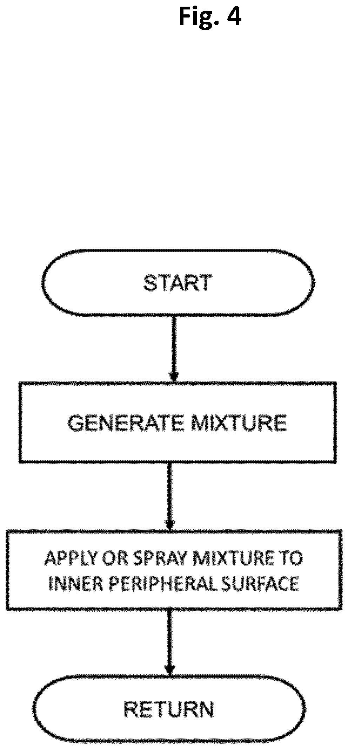

FIG. 4 shows the details of the third step S3. The third step S3 includes a step S31 of generating a mixture and a step S32 of applying or spraying the mixture.

In the step S31, a mixture is generated by mixing the powder 12 containing carbon black. The mixture generated in the step S31 is, for example, a liquid in which the powder 12 is mixed, and is in the form in which the powder 12 is precipitated when left alone.

In the step S32, the mixture is applied or sprayed to the inner peripheral surface of the sealant layer 10. Accordingly, the cover layer 11 is formed on the inner peripheral surface of the sealant layer 10 by executing the third step S3 which includes the step S31 and the step S32. Deterioration of the sealant layer 10 is suppressed by mixing the powder 12 containing carbon black in the cover layer 11. Furthermore, the cover layer 11 is easily and uniformly formed by applying or spraying the mixture.

In the step S31, powder containing carbon black in a proportion of 0.5 to 5.0% is preferably mixed. Accordingly, deterioration of the sealant layer 10 is suppressed, and sufficient fluidity of the viscosity sealing agent is ensured. Therefore, an excellent puncture sealing effect is maintained.

Although the pneumatic tire 1 according to the present invention has been described in detail above, the present invention is not limited to the above specific embodiment but to the scope defined by the appended claims.

### EXAMPLES

Pneumatic tires having the basic structure in FIG. 1 or 2 with a size of 215/55R17 were produced as test tires on the basis of specifications in Table 1, and were tested for various kinds of performance. The test methods are as follows.

### <Puncture Resistance>

The tires of the respective specifications were fitted to rims having the same size and were inflated to an internal pressure of 250 kPa, and 50 nails (JIS N150 (diameter: 5.2 mm)) were driven into the groove bottom of the tread portion of each tire in a room at 25°C. After 1 hour, the nails were pulled out, and it was confirmed whether there was an air leak. The results are represented by indexes with the result of Comparative Example 1 being regarded as 100. A higher value indicates that the puncture resistance is better.

### <Foreign Matter Non-Adhesive Performance>

Ten ping-pong balls were put into each of the cavities of the tires of the respective specifications, and each tire was rotated about the tire axial direction three times. Then, the tire was shaken ten times, and the number of ping-pong balls remaining in the cavity was counted. The results are represented by indexes with the result of Comparative Example 1 being regarded as 100. A lower value indicates that the foreign matter non-adhesive performance is better.

### <Cost Performance>

The manufacturing costs of the tires of the respective specifications were calculated. The results are represented by indexes with the result of Comparative Example 1 being regarded as 100. A lower value indicates that the cost performance is better.

### <UV Resistance>

The tires of the respective specifications were exposed as single bodies to sunlight for 3 months. Then, the tires were evaluated for puncture resistance and foreign matter non-adhesive performance in the same manner as above, and the degree of deterioration in performance was comprehensively evaluated. The results are represented by indexes with the result of Example 1 being regarded as 100. A higher value indicates that the UV resistance is better.

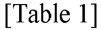

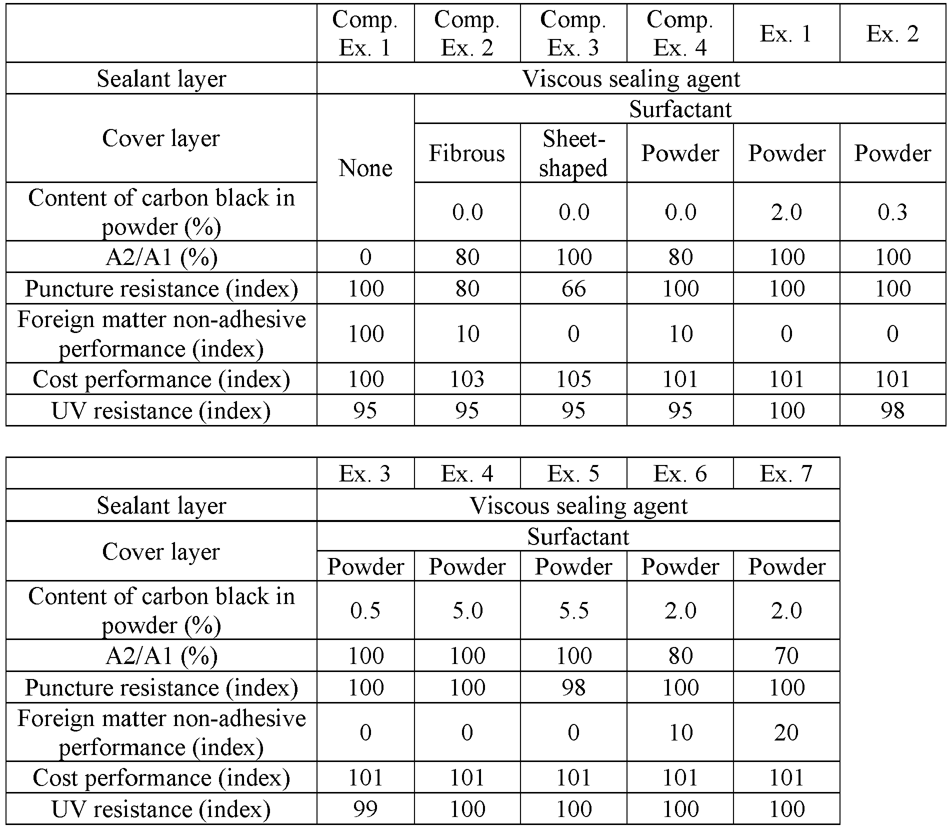

As is obvious from Table 1, it is confirmed that the pneumatic tire of each Example particularly has significantly improved foreign matter non-adhesive performance and UV resistance as compared with Comparative Examples.

## Claims

1. A production method (100) for a pneumatic tire (1, 1A), comprising:
a first step (S1) of vulcanizing a green tire to mold a vulcanized tire;
a second step (S2) of forming a sealant layer (10) containing a viscous sealing agent on an inner side in a tire radial direction of a tread portion (2) of the vulcanized tire; and
a third step (S3) of forming a cover layer (11) covering the sealant layer (10), on an inner peripheral surface of the sealant layer (10), wherein
the third step (S3) includes a step (S31) of generating a mixture by mixing powder (12) containing carbon black, and a step (S32) of applying or spraying the mixture to the inner peripheral surface.

2. The production method (100) for a pneumatic tire (1, 1A) according to claim 1, wherein the third step (S3) includes a step (S31) of mixing powder (12) containing carbon black in a proportion of 0.5 to 5.0%.

## Patentansprüche

1. Herstellungsverfahren (100) für einen Luftreifen (1, 1A), umfassend:
einen ersten Schritt (S1) des Vulkanisierens eines Reifenrohlings, um einen vulkanisierten Reifen zu formen;
einen zweiten Schritt (S2) des Bildens einer Dichtungsschicht (10), die ein viskoses Dichtungsmittel auf einer Innenseite in einer Reifenradialrichtung eines Laufflächenabschnitts (2) des vulkanisierten Reifens enthält; und
einen dritten Schritt (S3) des Bildens einer Deckschicht (11), welche die Dichtungsschicht (10) an einer inneren umlaufenden Fläche der Dichtungsschicht (10) bedeckt, wobei
der dritte Schritt (S3) einen Schritt (S31) des Erzeugens einer Mixtur durch Mischen eines Pulvers (12), das Ruß enthält, und einen Schritt (S32) des Auftragens oder Sprühens der Mixtur auf die innere umlaufende Fläche umfasst.

2. Herstellungsverfahren (100) für einen Luftreifen (1, 1A) nach Anspruch 1, wobei der dritte Schritt (S3) einen Schritt (S31) des Mischens eines Pulvers (12) umfasst, das Ruß mit einem Anteil von 0,5 bis 5,0% enthält.

## Revendications

1. Procédé de fabrication (100) d'un bandage pneumatique (1, 1A), comprenant :
une première étape (S1) de vulcanisation d'un pneumatique cru pour mouler un pneumatique vulcanisé ;
une deuxième étape (S2) de formation d'une couche d'étanchéité (10) contenant un agent d'étanchéité visqueux sur un côté intérieur dans une direction radiale de pneu d'une partie de bande de roulement (2) du pneu vulcanisé ; et
une troisième étape (S3) de formation d'une couche de recouvrement (11) recouvrant la couche d'étanchéité (10), sur une surface périphérique intérieure de la couche d'étanchéité (10), dans lequel
la troisième étape (S3) comporte une étape (S31) de génération d'un mélange en mélangeant de la poudre (12) contenant du noir de carbone, et
une étape (S32) d'application ou de pulvérisation du mélange sur la surface périphérique intérieure.

2. Procédé de fabrication (100) d'un bandage pneumatique (1, 1A) selon la revendication 1, dans lequel la troisième étape (S3) comporte une étape (S31) de mélange de poudre (12) contenant du noir de carbone dans une proportion de 0,5 à 5,0 %.
